# EUROPÄISCHE PATENTANMELDUNG

(11) **EP 1 237 209 A1**
(43) Veröffentlichungstag der Anmeldung: **04.09.2002**
(21) Anmeldenummer: 02100099.7
(22) Anmeldetag: 01.02.2002
(51) Int. Cl.: H01M 2/10, H01M 10/50

(54) **Netzunabhängige Stromversorgungseinheit**

(30) Priorität: 14.02.2001 DE 10106810
(71) Anmelder: SIEMENS AKTIENGESELLSCHAFT, 80333 München (DE)
(72) Erfinder: Schworm, Ernst, 80538, München (DE); Steiner, Günther, 81245, München (DE)

(57) **Zusammenfassung**

Netzunabhängige Stromversorgungseinheit (1) mit mindestens einem Akkuelement (3), insbesondere zum Einsatz in einem explosionsgefährdeten Bereich, mit Mitteln zur Spitzentemperaturbegrenzung im Fall eines element-internen Kurzschlusses, wobei die Mittel zur Spitzentemperaturbegrenzung eine mit dem Akkuelement oder den Akkuelementen wärmeleitend verbundene Wärmesenke mit hoher Wärmekapazität aufweisen.

## Beschreibung

Die Erfindung betrifft eine netzunabhängige Stromversorgungseinheit mit mindestens einem Akkuelement nach dem Oberbegriff des Anspruchs 1.

Akkumulatoren oder Sekundärelemente, als galvanische Elemente zur Erzeugung elektrischer Energie, die nach Entladung wieder im wesentlichen voll aufgeladen werden können, gewinnen zur Stromversorgung tragbarer und speziell handgehaltener elektronischer Geräte (Handhelds) zunehmend an Bedeutung. Für Geräte mit großer Einschaltdauer und relativ hohem Strombedarf, wie etwa Mobiltelefone und Schnurlostelefone, stellen sie die einzige praktisch relevante Art der Stromversorgung dar, denn Primärelemente ("Batterien") sind hier unter wirtschaftlichen und Gebrauchswertaspekten in keiner Weise konkurrenzfähig.

Mit der schnell wachsenden Verbreitung von Akku-Stromversorgungseinheiten werden auch Sicherheitsaspekte des Betriebes von Akkus bzw. Sekundärelementen zunehmend bedeutsam. So ist angesichts der Tatsache, daß in explosionsgefährdeten Räumen tätiges Personal zunehmend Mobiltelefone oder Schnurlostelefone mit sich führt, die Eignung dieser Stromversorgungseinheiten für den Einsatz in solchen Bereichen nachzuweisen.

Bei einem internen Kurzschluß von Akkuzellen treten sehr hohe Temperaturen auf. Diese Temperaturen können das Gerät, in dem der entsprechende Akku zur Stromversorgung eingesetzt ist, beschädigen oder in gefährdeter Umgebung Brände oder Explosionen auslösen. Für Geräte, die für explosionsgefährdete Bereiche zugelassen sind, wird daher von den Zulassungsstellen eine Begrenzung der im Kurzschlußfall auftretenden Spitzentemperaturen gefordert.

In diesem Zusammenhang ist von Bedeutung, daß mit zunehmender Kapazität der Akkuzelle - in erster Näherung unabhängig vom konkreten Wirkprinzip - auch die im Kurzschlußfall auftretenden Temperaturen ansteigen. Während bei älteren, wenig leistungsfähigen Nickel-Kadmium-Akkus diese Temperaturen noch relativ unkritisch waren, treten beim Kurzschluß moderner Akkuzellen vom Nickel-Metallhydrid-Typ oder Lithium-Ionen-Typ mit hoher Energiedichte auch kritische Temperaturen auf.

Es ist bekannt, durch entsprechende Schutzschaltungen Vorsorge gegen einen äußeren Kurzschluß der Zellen in Akku-Stromversorgungseinheiten zu treffen. Die einzige bisher bekannte Maßnahme zur Temperaturbegrenzung im Falle eines internen Kurzschlusses ist jedoch die Begrenzung des Energieinhaltes der Zellen - die natürlich die mit modernen Zellentypen erreichbare Einsatzdauer bis zum Aufladen (und damit eine der entscheidenden Gebrauchswerteigenschaften) wesentlich verschlechtern würde.

Der Erfindung liegt daher die Aufgabe zugrunde, eine verbesserte Stromversorgungseinheit der gattungsgemäßen Art bereitzustellen, bei der die im Falle eines zellen-internen Kurzschlusses auftretenden Spitzentemperaturen auf für das Gerät und die Umgebung unkritische Werte begrenzbar sind.

Diese Aufgabe wird durch eine Stromversorgungseinheit mit den Merkmalen des Anspruchs 1 gelöst.

Da die innere Energie der Akkuelemente im Fall eines internen Kurzschlusses fast völlig in Wärme umgewandelt wird, ist bei begrenzten Möglichkeiten zur Wärmeabführung an die Umgebung (wie sie üblicherweise in elektronischen Geräten gegeben sind) die Maximaltemperatur im wesentlichen nur durch die eigene Wärmekapazität der Akkuzellen bestimmt. Diese ist jedoch - zumindest im elektrochemisch relevanten Teil ihres Aufbaus - nicht wesentlich veränderbar. Eine Erhöhung könnte beispielsweise durch wesentliche Verstärkung des Mantels erreicht werden. Dies würde aber die Masse und natürlich vor allem auch die Kosten in unvertretbarer Weise in die Höhe treiben.

Die Erfindung schließt, auf diesen Überlegungen fußend, den wesentlichen Gedanken der Bereitstellung einer externen Wärmesenke mit hoher Wärmekapazität ein. Diese Wärmesenke steht in gutem Wärmeleitungskontakt mit dem Sekundärelement oder den Sekundärelementen, so daß sich im Kurzschlußfall entwickelnde Wärme praktisch sofort in die Wärmesenke abgeleitet werden kann. Die Entstehung unzulässiger Spitzentemperaturen wird damit - entsprechende Dimensionierung der Wärmesenke sowie der wärmeleitenden Verbindung vorausgesetzt - zuverlässig verhindert.

In einer ersten vorteilhaften Ausführung der Erfindung weist die Wärmesenke mindestens ein massives Metallteil auf, welches eine große Kontaktfläche mit dem Mantel des kurzschlußgefährdeten Akkuelementes bzw. der Akkuelemente hat. Metallteile sind wegen ihrer hohen Wärmeleitfähigkeit und Wärmekapazität besonders geeignet. Im Rahmen der Erfindung liegt aber auch der Einsatz anderer Werkstoffe mit hoher Wärmekapazität und Wärmeleitfähigkeit, z. B. von hochgradig mit Metallteilchen gefüllten Elastomeren bzw. Polymeren.

In einer weiteren vorteilhaften Ausführungsform sind mehrere Akkuelemente vorgesehen und derart wärmeleitend miteinander verbunden, daß die Wärmesenke bei internem Kurzschluß eines der Akkuelemente mindestens ein weiteres der Akkuelemente - bevorzugt sämtliche weiteren Akkuelemente - umfaßt. Die Einbeziehung benachbarter Akkuzellen, die nicht kurzgeschlossen sind, in einen Temperaturausgleichs-Verbund der Stromversorgung ermöglicht die Erfüllung der Zulassungsanforderungen für hohe Schutzklassen, bei denen eine zunehmende Anzahl gleichzeitig anzunehmender Fehler nicht zu unerlaubten Temperaturerhöhungen führen darf.

In einer besonders vorteilhaften Konstruktion hat das erwähnte massive Metallteil eine große Kontaktfläche mit den Mänteln der Akkuzellen. Es dient vermöge seiner eigenen Wärmekapazität selbst als ein Teil der Wärmesenke und stellt zugleich eine hochwirksame wärmeleitende Verbindung der Akkuzellen mit ihren jeweiligen Wärmekapazitäten untereinander dar.

Bei Einsatz der - weitaus am meisten verbreiteten - Akkuzellen bzw. Sekundärelemente mit zylindrischer Grundform (Mono-, Baby- bzw. Mignonzellen) hat auch das oder jedes Metallteil mindestens eine als Zylinderabschnitt geformte Kontaktfläche, die sich an die Außenfläche der verwendeten Akkuelemente anschmiegt. Die Breite dieser Kontaktfläche entspricht vorteilhafterweise im wesentlichen der Länge der Akkuelemente, um die thermische Kontaktfläche zu maximieren. Es versteht sich, daß Akkus mit einer abweichenden Grundform - beispielsweise einer Quaderform - ebenfalls mit an die Außenform angepaßtem Metallteil oder angepaßten Metallteilen zu kombinieren sind.

Grundsätzlich ist bei der konkreten Gestaltung des als Wärmesenke und/oder Wärmeleitelement dienenden Teiles eine möglichst große Kontaktfläche mit der Außenwandung des Akkuelementes bzw. der Akkuelemente anzustreben. Bei zylindrischen Akkuelementen wird dem - neben einer möglichst großen Breite des Metallteiles - mit einem möglichst großen Umschlingungswinkel Rechnung getragen. Jedoch ist bei der konkreten konstruktiven Gestaltung zusätzlichen Anforderungen, insbesondere bezüglich der Baugröße und äußeren Form der Stromversorgungseinheit sowie der Herstellungskosten, Rechnung zu tragen.

Je nach Anzahl der in wärmeleitende Verbindung miteinander zu bringenden Akkuelemente und deren räumlicher Lage in der Stromversorgungseinheit können daher Umschlingungswinkel im Bereich zwischen 30° und 120° zweckmäßig sein. Weiterhin kann zum einen eine kompakte, massive Ausführung des Metallteils bzw. der Metallteile - insbesondere als kostengünstiges Strangpreßprofil - zweckmäßig sein, während in anderen Konstruktionen die Ausführung als relativ flaches, durch Umformen mit den erwähnten Zylinderabschnitten versehenes Teil zweckmäßig ist. Insbesondere im letzteren Fall kann eine klammerartige Gestaltung des Metallteiles zugleich eine Möglichkeit zur Fixierung der Akkuzellen relativ zueinander bieten.

Sowohl im Hinblick auf die thermischen Eigenschaften als auch unter Fertigungs- und Kostengesichtspunkten ist der Einsatz von Kupfer oder Aluminium als Material für das Metallteil bevorzugt.

Vorteile und Zweckmäßigkeiten der Erfindung ergeben sich im übrigen aus den Unteransprüchen sowie der nachfolgenden Beschreibung bevorzugter Ausführungsbeispiele anhand der Figuren. Von diesen zeigen:
Fig. 1 als erste Ausführungsform der Erfindung eine Stromversorgungseinheit mit einem Paar von als Mignonzellen ausgeführten Akkuelementen und zwei klammerartigen Metallteilen,
Fig. 2 als zweites Ausführungsbeispiel der Erfindung eine Vierergruppe von Akkus in Mignonzellen-Form mit einem Metallteil,
Fig. 3 als dritte Ausführungsform der Erfindung eine Vierergruppe von Akkus in Mignonzellen-Form, kombiniert mit sechs als Strangpreßprofile ausgebildeten Metallteilen,
Fig. 4 als vierte Ausführungsform der Erfindung ein quaderförmig geformtes Akkuelement, kombiniert mit einem L-förmigen Metallteil als Wärmesenke,
Fig. 5 als fünfte Ausführungsform eine Vierergruppe von Akkus in Mignonzellen-Form, kombiniert mit einem als Strangpreßprofil ausgebildeten zentralen Metallteil,
Fig. 6 als sechste Ausführungsform eine Zweiergruppe von Mignonzellen-Akkus mit metallischer Umhüllung als Wärmesenke,
Fig. 7 als siebente Ausführungsform ein Paar flach quaderförmiger Akkuzellen mit einer rechteckigen Metallplatte als Wärmeleiter und -senke und
Fig. 8 als achte Ausführungsform ein Paar flach quaderförmiger Akkuzellen mit einem U-förmigen Metallprofil als Wärmeleiter und -senke.

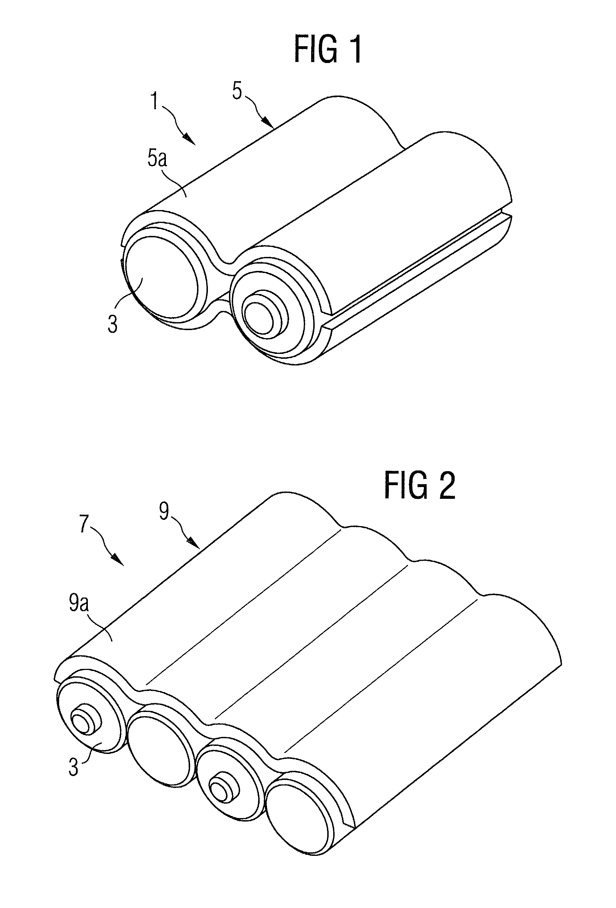

Fig. 1 zeigt einen Akkublock 1 aus zwei Mignonzellen-Akkus 3, die zwischen zwei identisch geformte, klammerartige Metallteile 5 eingelegt sind. Im Falle eines element-internen Kurzschlusses eines der Akkus bilden die Metallteile 5 und der jeweils andere, nicht kurzgeschlossene Akku eine Wärmesenke zur Begrenzung der infolge des Kurzschlusses auftretenden Spitzentemperatur im Akkublock 1.

Wie aus der Figur zu erkennen ist, weisen die Metallteile 5 jeweils zwei an die zylindrische Grundform der Mignonzellen-Akkus 3 angepaßte zylindrische Wandungsabschnitte 5a auf, die an der Akku-Wandung anliegen, diese auf einem Winkel von ca. 150° umschließen und eine nahezu der Länge der Akkus entsprechende Breite haben. Hierdurch wird eine große Wärmekontaktfläche realisiert. Die zwischen 1 mm und einigen mm liegende Wandungsdicke der Metallteile 5 ergibt ein ausreichendes Volumen zur Realisierung einer Wärmekapazität, die eine Überschreitung der zulässigen Spitzentemperatur im Kurzschlußfall sicher verhindert.

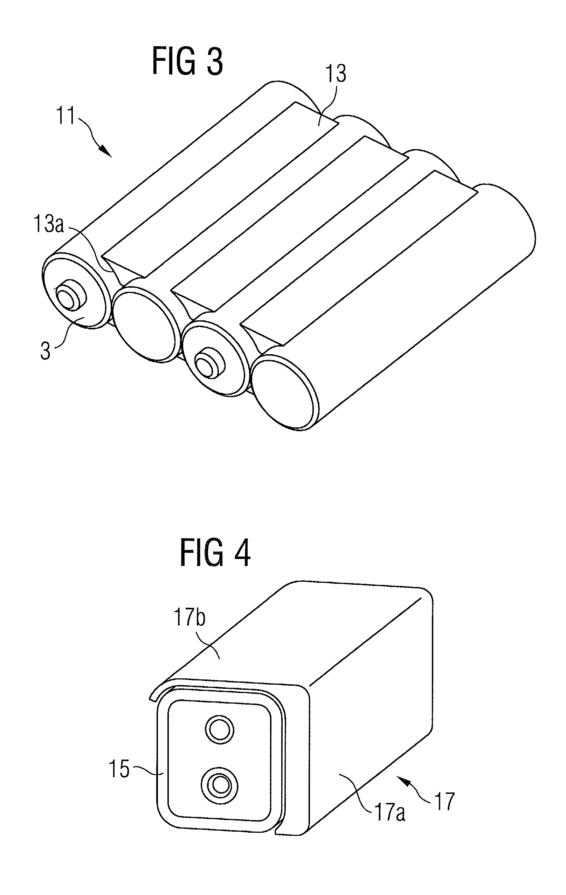

Analog wirkt der Akkublock 7 nach Fig. 2, der aus vier Mignonzellen-Akkus 3 und einem diese haubenartig überdeckenden Metallteil 9 mit vier zylindrischen Wandungsabschnitten 9a gebildet ist. Auch hier entspricht die Breite des Metallteiles 9 im wesentlichen der Länge der Akkus 3, der Umschlingungswinkel ist aber aufgrund der dichteren Packung der Akkus deutlich kleiner. Auch die pro Akku verfügbare Wärmekapazität des Metallteiles 9 ist kleiner; dies wird aber durch die Vereinigung sämtlicher Akkus zu einer zusammenhängenden Wärmesenke mit insgesamt ausreichender Wärmekapazität mehr als kompensiert. Die Anordnung nach Fig. 2 zeigt auch bei gleichzeitigem Kurzschluß zweier Akkus eine Spitzentemperatur, die im zulässigen Bereich bleibt.

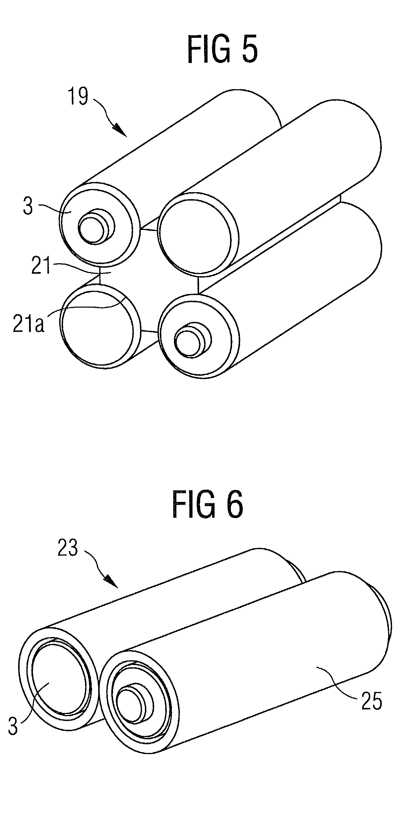

Fig. 3 zeigt als weiteres Ausführungsbeispiel einen Akkublock 11 mit vier Mignonzellen-Akkus 3 und sechs zwischen diese eingefügten, als Strangpreßprofil hergestellten Metallteilen 13. Diese Metallteile haben einen im wesentlichen dreieckigen Querschnitt, wobei zwei Seiten des "Dreiecks" allerdings durch Kreisbögen gebildet sind, die an den Querschnitt der Mignonzellen-Akkus 3 angepaßt sind. Auch die Metallteile 13 weisen somit - wie die Metallteile der vorgenannten Ausführungsformen - zylindrische Wandungsabschnitte 13a auf. Sie sind besonders kostengünstig zu fertigen, die Bildung des Akkublocks 13 erfordert allerdings hier einen etwas höheren Montageaufwand als bei der ersten und zweiten Ausführungsform.

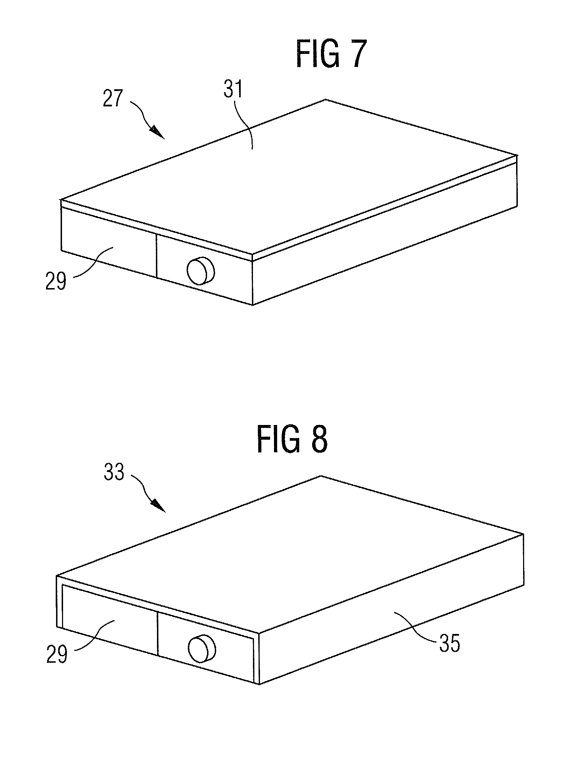

Fig. 4 zeigt einen einzelnen Akku 15 in Quaderform, wie er beispielsweise als 9V-Block bekannt ist, mit einem L-förmigen Metallteil 17 als Wärmesenke. Das Metallteil 17 hat einen ersten, dickeren Schenkel 17a und einen zweiten, dünneren Schenkel 17b, der den Akku 15 federelastisch klammerartig umgreift und dadurch das Metallteil 17 zur Erreichung einer guten Wärmeübertragung an ihn anpreßt. Mit dem relativ großvolumigen dickeren Schenkel 17a wird die zu einer wirksamen Begrenzung der Spitzentemperatur im Falle eines Kurzschlusses des relativ energiereichen Akkus 15 erforderliche Metallvolumen bereitgestellt.

Fig. 5 schließlich zeigt nochmals einen als Akku-Viererpack ausgeführten Akkublock 19 mit vier Mignonzellen-Akkus 3 und einem Metallteil 21. Die Akkus 3 sind hier an den Ecken eines Quadrates angeordnet, und zwischen ihnen befindet sich das in grober Näherung kreuzförmig ausgebildete Metallteil 21. Dieses hat vier zylindrische Wandungsabschnitte 21a, die die Wandung des jeweils benachbarten Akkus über einen Winkel von 90° berühren. Die Funktionsweise entspricht im wesentlichen den Anordnungen nach Fig. 2 oder 3; vorteilhaft ist aber hier insbesondere die Verbindung aus niedrigen Herstellungskosten für das Strangpreß-Metallteil 21 und geringem Montageaufwand.

Fig. 6 zeigt einen Akkublock 23 mit zwei Mignonzellen-Akkus 3 und einem beide vollständig ummantelnden Metallteil 25 mit der Querschnittsgestalt einer "Acht", welches mithin zwei hohlzylindrische Teile 25a, 25b aufweist. Die Wirkungsweise entspricht derjenigen bei der Anordnung nach Fig. 1, jedoch ist die Kontaktfläche zwischen den Akkus und dem Metallteil dieser gegenüber noch vergrößert.

Fig. 7 zeigt einen Akkublock 27 mit einem Paar flach quaderförmiger Akkus 29, welche gemeinsam mit einer rechteckigen Metallplatte 31 bedeckt sind. Diese wirkt - ebenso wie das jeweilige Metallteil bei den vorgenannten Ausführungsformen - einerseits selbst vermöge ihrer Wärmekapazität als Wärmesenke und dient andererseits der Wärmeleitung zum zweiten Akku im Falle eines Kurzschlusses eines der Akkus.

Fig. 8 zeigt schließlich einen weiteren Akkublock 33, der neben den flach quaderförmigen Akkus 29 aus Fig. 7 ein diese gemeinsam umgreifendes U-Profil aus Metall (Kupfer oder Aluminium) als Wärmeleiter und -senke umfaßt.

Die Ausführung der Erfindung ist nicht auf die oben beschriebenen Beispiele und hervorgehobenen Aspekte beschränkt, sondern ebenso in einer Vielzahl von Abwandlungen möglich, die im Rahmen fachgemäßen Handelns liegen.

## Patentansprüche

1. Netzunabhängige Stromversorgungseinheit (1; 7; 11; 15, 17; 19; 23; 27; 33) mit mindestens einem Akkuelement (3; 15; 29), insbesondere zum Einsatz in einem explosionsgefährdeten Bereich, mit Mitteln zur Spitzentemperaturbegrenzung im Fall eines element-internen Kurzschlusses,
**dadurch gekennzeichnet, daß**
die Mittel zur Spitzentemperaturbegrenzung eine mit dem Akkuelement oder den Akkuelementen wärmeleitend verbundene Wärmesenke mit hoher Wärmekapazität aufweisen.

2. Stromversorgungseinheit nach Anspruch 1,
**dadurch gekennzeichnet, daß**
die Wärmesenke mindestens ein massives Metallteil (5; 9; 13; 17; 21; 25; 31; 35) aufweist, welches eine große Kontaktfläche mit dem Mantel des Akkuelementes (3; 15; 29) oder den Mänteln der Akkuelemente hat.

3. Stromversorgungseinheit nach Anspruch 1 oder 2,
**dadurch gekennzeichnet, daß**
mehrere Akkuelemente (3; 29) vorgesehen sind, die wärmeleitend miteinander verbunden sind, derart, daß die Wärmesenke bei element-internem Kurzschluß eines Akkuelementes mindes-tens ein weiteres Akkuelement umfaßt.

4. Stromversorgungseinheit nach Anspruch 2 und 3,
**dadurch gekennzeichnet, daß**
das massive Metallteil (5; 9; 13; 21; 25; 31; 35) jeweils eine große Kontaktfläche mit den Mänteln zweier Akkuelemente hat.

5. Stromversorgungseinheit nach einem der Ansprüche 2 bis 4,
**dadurch gekennzeichnet, daß**
das Akkuelement (3) oder die Akkuelemente eine zylindrische Außenform hat bzw. haben und das oder jedes Metallteil (5; 9; 13; 21; 25) mindestens eine als Zylinderabschnitt geformte Kontaktfläche (5a; 9a; 13a; 21a; 25a, 25b) hat, deren Breite insbesondere im wesentlichen gleich der Länge des zylindrischen Akkuelementes ist.

6. Stromversorgungseinheit nach einem der Ansprüche 3 bis 5,
**dadurch gekennzeichnet, daß**
das oder jedes Metallteil (5; 9; 13; 21; 25) mindestens zwei als Zylinderabschnitt geformte Kontaktflächen (5a; 9a; 13a; 21a; 25a, 25b) hat, mit denen es je ein Akkuelement berührt.

7. Stromversorgungseinheit nach Anspruch 6,
**gekennzeichnet durch**
vier zylindrische Akkuelemente (3) und ein einzelnes Metallteil (9; 21) mit vier als Zylinderabschnitte (9a; 21a) geformten Kontaktflächen, welches alle Akkuelemente mit einem Umschlingungswinkel von = 60° berührt.

8. Stromversorgungseinheit nach Anspruch 6,
**gekennzeichnet durch**
zwei zylindrische Akkuelemente (3) und zwei Metallteile (5) mit je zwei als Zylinderabschnitte geformten Kontaktflächen (5a), welche jeweils beide Akkuelemente mit einem Umschlingungswinkel = 120° berühren.

9. Stromversorgungseinheit nach einem der Ansprüche 5 bis 8,
**dadurch gekennzeichnet, daß**
die Akkuelemente (3) als Mignonzellen ausgeführt sind.

10. Stromversorgungseinheit nach einem der vorangehenden Ansprüche,
**gekennzeichnet durch**
n Akkuelemente (3) und mindestens (n-1) Metallteile (13), die jeweils zwischen zwei Akkuelemente eingefügt sind.

11. Stromversorgungseinheit nach Anspruch 10,
**dadurch gekennzeichnet, daß**
die Akkuelemente (3) eine zylindrische Außengestalt haben und 2x(n-1) Metallteile vorgesehen sind, die jeweils zwischen zwei Akkuelemente (13) eingefügt sind und diese mit einem Umschlingungswinkel im Bereich zwischen 30° und 90° berühren.

12. Stromversorgungseinheit nach einem der vorangehenden Ansprüche,
**dadurch gekennzeichnet, daß**
das Metallteil bzw. die Metallteile als Strangpreßprofil (13; 21; 35) bzw. Strangpreßprofile ausgeführt ist/sind.

13. Stromversorgungseinheit nach einem der Ansprüche 6 bis 8 oder 12,
**dadurch gekennzeichnet, daß**
das Metallteil (5; 9; 25; 31; 35) über seine gesamte Erstreckung eine im wesentlichen konstante Dicke, insbesondere von 1 mm oder größer, hat.

14. Stromversorgungseinheit nach einem der Ansprüche 6 bis 8, 12 oder 13,
**dadurch gekennzeichnet, daß**
das Metallteil (5; 9; 35) oder die Metallteile diejenigen Akkuelemente (3; 29), die es wärmeleitend miteinander verbindet oder die sie wärmeleitend miteinander verbinden, klammerartig umfaßt bzw. umfassen, wodurch eine Fixierung der Akkuelemente in ihrer Lage relativ zueinander bewirkt wird.

15. Stromversorgungseinheit nach einem der Ansprüche 2 bis 4 oder 12 bis 14,
**dadurch gekennzeichnet, daß**
das Akkuelement (15; 29) bzw. die Akkuelemente Quaderform hat bzw. haben und das Metallteil mindestens eine ebene Kontaktfläche hat, insbesondere als ebene Platte (31), L-Profil (17) oder U-Profil (35) ausgeformt ist.

16. Stromversorgungseinheit nach einem der Ansprüche 2 bis 15,
**dadurch gekennzeichnet, daß**
das Metallteil (5; 9; 13; 17; 21) aus Kupfer oder Aluminium oder aus hochgradig mit Kupfer- oder Aluminiumteilchen gefülltem Kunststoff gefertigt ist.
